(19) Europäisches Patentamt
European Patent Office
Office européen des brevets

(11) **EP 1 401 738 B1**

(12) **EUROPEAN PATENT SPECIFICATION**

(45) Date of publication and mention
of the grant of the patent:
**17.10.2007 Bulletin 2007/42**

(51) Int Cl.:
***B65D 85/60*** *(2006.01)*    *B65D 75/12* *(2006.01)*
***B65D 75/20*** *(2006.01)*

(21) Application number: **01274250.8**

(22) Date of filing: **07.12.2001**

(86) International application number:
**PCT/EP2001/014632**

(87) International publication number:
**WO 2002/094689 (28.11.2002 Gazette 2002/48)**

(54) **PACKAGED CONFECTIONERY COMBINATION INCLUDING CONFECTIONERY PIECES PACKED IN-GROUP AND METHOD FOR PRODUCING SUCH A COMBINATION**

VERPACKTE SÜSSWARENKOMBINATION MIT IN GRUPPEN VERPACKTEN SÜSSWARENTEILEN UND VERFAHREN ZUR HERSTELLUNG EINER SOLCHEN KOMBINATION

COMBINAISON DE CONFISERIES SOUS FORME EMBALLEE COMPRENANT DES PRODUITS DE CONFISERIE EMBALLES EN GROUPE ET PROCEDE DE PRODUCTION DE CETTE COMBINAISON

(84) Designated Contracting States:
**AT BE CH CY DE DK ES FI FR GB GR IE IT LI LU MC NL PT SE TR**

(30) Priority: **23.05.2001 EP 01112551**

(43) Date of publication of application:
**31.03.2004 Bulletin 2004/14**

(73) Proprietor: **SOCIETE DES PRODUITS NESTLE S.A.**
**1800 Vevey (CH)**

(72) Inventors:
• **HENTZEL, Stephane**
**York YO31 7ES (GB)**

• **THOMPSON, Karen**
**Macclesfield**
**Cheshire SK10 1GD (GB)**
• **BARRETT, Graham**
**Brandsby Y061 4RH (GB)**

(74) Representative: **Borne, Patrice Daniel**
**Avenue Nestlé 55**
**1800 Vevey (CH)**

(56) References cited:
**EP-A- 0 109 353**    **EP-A- 0 508 899**
**EP-A- 1 041 012**    **FR-A- 850 597**
**US-A- 4 658 963**    **US-A- 5 215 249**

**Description**

The present invention relates to a novel combination of confectionery pieces and a packaging adapted therefore that prevents scuffing of the confectionery pieces and improves the convenience for the consumer. The invention also relates to a method for producing a combination comprising confectionery pieces and a packaging.

Small items of confectionery such as chocolates are usually packed in "vacuum thermoformed" or cardboard trays to protect them and, more particularly, to prevent their surfaces from scuffing. However, the packaging of such products makes the presentation and display elaborate and it is not convenient to snack them on the go. The same confectionery items might be found in bags but they lose their gloss very quickly due to the effect of scuffing which takes place in the bag. In order to reduce scuffing, a resistant coating could be applied around the confectionery pieces so that they become more resistant. This solution requires an additional production stage and may possibly affect the taste and/or texture of the product. Another solution usually consists of individually wrapping the confectionery pieces with a foil or film before filling them into the bags by vertical form-fill-seal machines. However, the individual packaging is costly and requires an additional packing stage. Furthermore, the consumption is not very convenient for the consumer who has to unwrap the confectionery piece.

On the contrary, chocolate bars packed in flow-wrap packages, also called "pillow pack", are more attractive chocolate products for eating on the go. One of the most successful chocolate snacks is the famous KitKat® bar product which is an elongated angular moulded chocolate bar, with wafers inside, longitudinally scored along at least one partition line that can make the bar portionable. A flow wrap package surrounds the bar to protect it and to keep its nice glossy appearance.

It would be desirable to propose alternative formats of such a confectionery product having the same standard of quality and appearance but which would further offer a high degree of convenience and easy nibbling or snacking of the product.

To date, there does not exist a confectionery product having an angular configuration that can be nibbled as in a bag but retain its gloss and its shape integrity while stored. There exists round pieces of chocolate with a biscuit inside packed in flow wrap bag such as the

Maltesers® chocolates from Mars that can be nibbled without the need to be portioned. However, these products are less subjected to scuffing because of their intrinsic shape with no sharp edges and they are also usually covered by a protective coating or glaze that increases their resistance to scuffing when they are in the bag.

EP 0 109 353 relates to a package containing at least one row of disk-shaped objects, especially biscuits, adjoining each other on their flat sides. According to this method, the objects counted and grouped for packaging are raised parallel to their flat sides into an input station, pushed together with a portion of wrapping sheet at right angles to their flat sides into an intermediate station in which a longitudinal seam is sealed and two transverse seams are sealed such that roots of all the seams lie in a common plane. However, due to the very tight product arrangement in the pack, such a combination of pack and food product does not provide a satisfactory solution for nibbling of the products in the pack once the pack is opened.

FR 850.597 relates to a rectangular enveloppe-type packaging for goods especially adapted for receiving a high number of goods. However, it does not provide, as such, a solution to avoid scuffing of sensitive food items, in particular items of angular format, as well as convenience for consuming the food items.

Therefore, it would be desirable to propose a solution for providing a novel angular format of confectionery snacks that does not scuff when stored in the pack but which would provide easy nibbling to the consumer in a very attractive and user-friendly manner. It would also be desirable to have a solution that is inexpensive and does not affect the taste of the product, i.e., does not require an additional coating step of the food product and requires minimal quantities of packaging material and, furthermore, looks attractive for the consumer.

For that, the invention relates to a packaged confectionery combination which comprises a closed flexible flow wrap package member and a confectionery product packed therein. The confectionery product is a plurality of individual confectionery pieces packed in group within said package member. The confectionery pieces are arranged in a matrix configuration along at least two directions within the package member so as to form at least one layer of at least two rows. Each row includes a series of confectionery pieces and the rows are arranged in parallel together. The package member defines an interior which is tight enough around said confectionery pieces so as to maintain the integrity and shape of said matrix configuration when the package member is closed. In addition, the confectionery pieces are arranged so that there is at least a clearance left between the confectionery pieces effective to enable confectionery pieces to collapse in the available volume of the package member so as to promote convenient nibbling. Such a clearance contributes to the collapsing of the confectionery pieces when tension of the package member around the confectionery product is released during opening of the package. The clearance prevents the pieces from remaining stacked onto one another after the opening of the package. The clearance also ensures there is room available in the package to accomodate random rearrangement of the pieces in the package after they collapsed. Moreover, the confectionery pieces are touching along a first side portion and are distant along another side portion. Whereas the touching portion favours the row arrangement when the package is closed, the transition between the portions promotes tilting and collapsing of the rows of confectionery pieces when the package is opened.

As a result of such a construction, the confectionery pieces are organized in such as manner that they are available for nibbling by the consumer while the frictions and other mechanical interactions between the pieces are kept minimal during storage in the tensioned pack thereby successfully reducing scuffing in the pack.

It is meant by "tight arrangement", a configuration where the confectionery pieces form with the flow wrap packaging a unit that is capable of retaining its organized matrix configuration by the effect of the tension and size of the flow wrap around the confectionery product and, a unit that is sufficiently resistant to disorder to prevent overlapping of one piece by another in normal situation of manipulation when the package is closed. More particularly, the configuration in matrix should be retained in situations such as when the package is moved from an horizontal position to a vertical position and vice versa or when the package is shaken by one extremity. Such situations are frequently met, when the packages are transported, stored horizontally or vertically on shelves or manipulated by the consumer. The confectionery pieces should also normally resist rotation along their axis as resulting from the "tight" configuration. Conversely, the pieces should not be too tightly packed until to remove all gaps between the pieces to an extent that would cause the package to deform and take a "banana" shape which would be regarded as a visual defect of the product.

More particularly, the package member forms a sleeve comprising two opposite web portions wrapping on the two main outer sides of said layer(s); said sleeve being sealed along a longitudinal seam. The sleeve member is further closed at the both ends of the layer(s) by transverse end seams.

In a first embodiment, the sleeve forms two substantially rectangular opposite web portions folded on one longitudinal edge and having the three other edges forming sealing seams.

In a second embodiment, the sleeve forms a substantially flattened tubular web with a longitudinal seam extending approximately centrally along one side of the sleeve and closed on both transverse edges by transverse end seams.

More preferably, the web portions are maintained distant from each other around the outer of the confectionery layer(s), so that when the package is positioned horizontally or vertically at rest, the distance do between the two web portions is lower than twice the height $h_0$ of said layer(s). Again, the dimensions, as defined, have been found advantageous for limiting the interactions between the confectionery pieces in the package while forming a bag which upon opening allows easy nibbling of the confectionery pieces.

Preferably, the confectionery pieces are housed in the interior of the flow wrap package freely without additional support member such as a tray, a cardboard member and the like. Although such support could be used, it is not desired to have it, as it would stiffen the flow wrap package after opening that could not conveniently form a bag for nibbling of the confectionery pieces. Therefore, the package would be less user-friendly and also more costly to produce. Therefore, according to one beneficial aspect of the invention, the combination of the flow wrap package with the matrix configuration of the confectionery pieces tightly packed enables the product to appear like a flow wrapped bar when the package is closed and to behave like a confectionery bag for easily and conveniently nibbling the confectionery pieces when the package is subsequently opened.

Additionally, the flow wrap package member comprises an opening portion with an opening means adapted to open said opening portion of said package member whereby opening of said opening means causes the tension of the package member around the chocolate pieces to release and consequently, enable to the confectionery pieces to lose their matrix configuration and to become disordered in the package member. By opening of the package as defined, the package can easily be transformed upon opening into a pouch or bag where the confectionery pieces are easily and directly available for nibbling.

In a preferred embodiment, the opening portion of the package extends along one edge of the package, advantageously along the edge of the greater length of the package, so as to maximize the opening of the package for making nibbling more convenient as in a bag.

It is contemplated to aid opening of the opening portion according to a privileged opening direction by providing suitable opening means that enables both the release of tension and the formation of a bag configuration that is convenient for nibbling. For that, the opening means may preferably be arranged to open the opening portion along a privileged line such as a tear cut means, a zipper-type opening, a tear tape, perforation, laser perforation or combination(s) thereof.

In the present application, the term " confectionery pieces" refers to any type of relatively small size items formed partially or totally of chocolate or chocolate-like material or delicate confectionery material such as a tempered or non-tempered dark, white or milk chocolate, a compound coating or other fat base compound or chocolate substitute or marzipan or sugar including or not wafer(s), biscuit(s), cooked sugar, nuts or fruits or any other edible inclusions.

In a preferred embodiment, a "tight arrangement" may be obtained successfully by horizontally wrapping the confectionery product under a certain wrapping tension without leaving any significant head space. Horizontal wrapping possesses the advantage to produce gentle wrapping of the confectionery product without scuffing it while precise control of the tightness of the package can be achieved. More precisely, control of the tightness may be achieved by controlling the dimensioning and tensioning of the package web that surrounds the confectionery product, more especially, along

EP 1 401 738 B1

its transversal axis, when forming the sleeve member that can be precisely adjusted and sealed longitudinally without deforming the confectionery pieces.

The present invention also relates to a method for providing confectionery pieces in a package that reduces scuffing of the pieces and promotes nibbling of the confectionery pieces wherein the confectionery pieces are wrapped in a flow wrapped package in a matrix configuration along at least two directions within the package so as to form at least one layer of at least two rows; each row consisting of a series of confectionery pieces and the rows being arranged in parallel together and wherein said package is adapted in tension and size around the confectionery pieces to retain said matrix configuration when closed and, conversely, is adapted to release tension sufficiently upon opening to form an open bag for nibbling of the confectionery pieces wherein the confectionery pieces are arranged so as to leave a clearance between the confectionery pieces effective to enable confectionery pieces to collapse in the available volume of the package member when opened wherein the sides of the confectionery pieces have touching portions extending by distant portions forming said clearance.

The invention also relates to a method for producing a combination comprising a flow wrap package and a plurality of individual confectionery pieces wrapped within the package into a matrix configuration wherein it comprises providing a scored block of confectionery, wrapping said block into a flow wrap package and breaking up said block within said flow wrap package.

This has been found to be beneficial to firstly wrap and subsequently break the confectionery products, as aforementioned, in order to predefine the arrangement of confectionery pieces in the wrap package,e.g., with minimal clearance therebetween, while enabling wrapping without risking to disturb the final distribution desired. Furthermore, moulding of the confectionery products made in blocks is cost efficient and facilitates mass production. Furthermore, the superimposition of several layers in the package is made easier with limited risks of misplacing the confectionery items.

Preferably, the wrapping of the block is carried out horizontally in an horizontal flow wrap device. Horizontal flow wrap device as opposed to vertical pillow wrap systems helps to wrap the confectionery block at high speed while controlling the size and tension of the package material around the block.

Still in a preferred embodiment, the plurality of confectionery pieces, as a result, is wrapped as a tight assembly of pieces capable of retaining its shape assembly of separate abutting pieces after breaking.

The invention also relates to a method for producing a combination consisting of a flow wrap package and a confectionery product wrapped within the package. The confectionery product is wrapped horizontally using an horizontal flow wrap device. The confectionery product is wrapped while forming a sleeve member having at least one longitudinal seam. The confectionery product forms, after wrapping, an arrangement of a plurality of separate confectionery pieces of more than one row; each row comprising at least two confectionery pieces. The flow wrap is capable of maintaining said arrangement in place until first opening of the flow wrap.

Preferably, the arrangement of confectionery pieces is retained in place, at least partly by the control of the dimensions; i.e., the width, and tension of the sleeve member as determined by the sealing of the longitudinal seam. provided in the flow wrap device.

The arrangement of confectionery pieces is wrapped while leaving a clearance between the confectionery pieces effective for the confectionery to collapse upon opening of the package wherein the sides of the confectionery pieces have touching portions extending by distant portions forming said clearance, and to occupy a volume less than the total available volume of the opened package.

These objects and others will be apparent from the drawings that are figured in annex in which:

Fig. 1 is a perspective view of the combination of the invention showing the confectionery pieces organized in matrix in solid line and the package surrounding the chocolate pieces in dotted line;

Fig 2 is another perspective view of the combination of Fig. 1 but with the confectionery pieces in dotted line and the package in solid line;

Fig. 3 is a side view of the combination along direction 25 indicated by arrow A in Fig. 2;

Fig. 4 is a cross-section view of the combination of Fig. 2 along line B-B;

Fig. 5 is a detail view of the opening means of the package of Figs. 1 to 4;

Fig. 6 is a view showing the package after opening and available for nibbling;

Fig. 7 is a perspective of a variant of the combination using another easy opening mode;

Fig. 8 is a perspective view of the variant of Fig. 7 after opening of the package to form a configuration of sachet;

4

Fig. 9 is a cross section view of the embodiment of Fig. 7 along line C-C;

Fig. 10 illustrates a schematic cross section view of another embodiment with two superimposed layers of confectionery pieces;

Fig. 11 illustrates a schematic view of the production line adapted for producing the combination of the invention including a packaging stage and a subsequent breaking stage;

Fig. 12 illustrate a schematic top view of the wrapping station of the production line of Fig. 11;

Fig. 13 illustrates the breaking-up operation along the transversal direction of the product;

Fig. 14 illustrates the breaking-up operation longitudinal to the direction of the product;

Fig. 15 illustrates a perspective view of a packaged combination before breaking off in a multitude of individual pieces;

Fig. 16 illustrates a cross-section view of a variant of the combination of the invention;

Fig. 17 illustrates another variant of fig. 16;

Fig. 18 illustrates another variant of fig. 16.

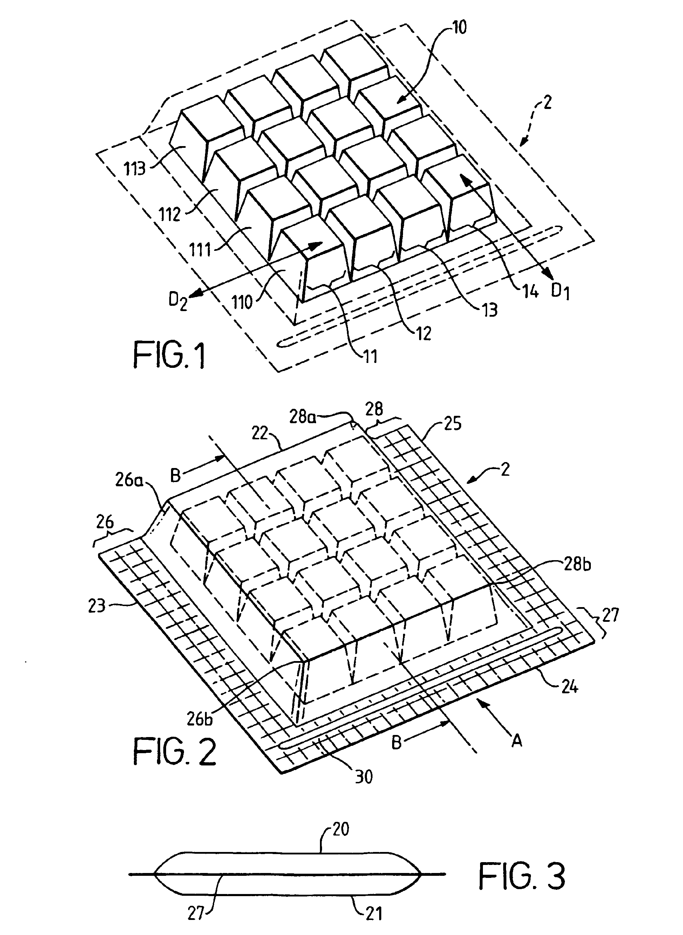

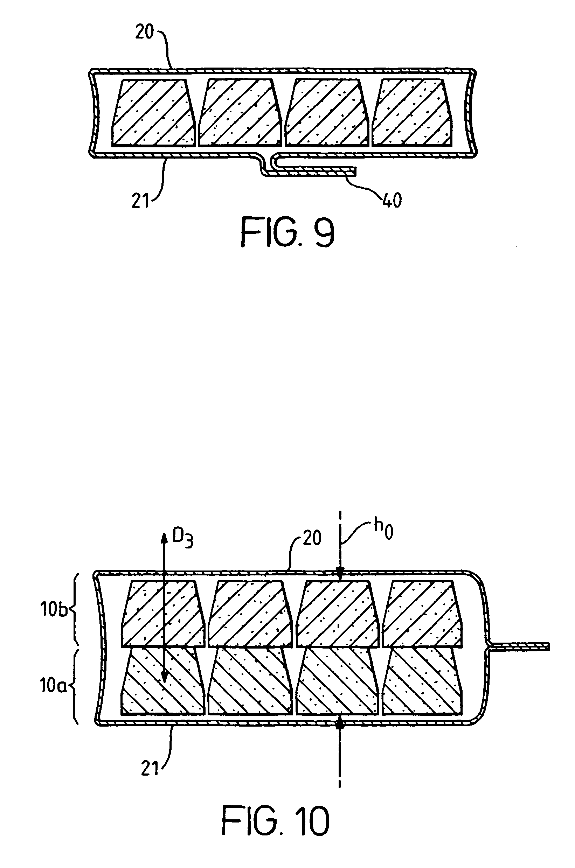

A first embodiment of the invention is illustrated in Figs. 1 to 6. The combination comprises a plurality of individual chocolate pieces 10 that are organized in a layer of pieces according to a matrix configuration along at least a first direction $D_1$ and a second direction $D_2$ orthogonal to the first direction $D_1$. If one considers first direction $D_1$ as a starting reference, the chocolates pieces are arranged in a series of rows 11, 12, 13 and 14 extending in parallel along $D_1$; each row including an equal number of chocolate pieces 110, 111, 112, 113, therefore forming a quadrilateral block of separate, substantially contiguous pieces with gaps inbetween. Each piece forms a separate item in the package in the sense that there is no specific connection between the pieces within the package. One piece of chocolate may be found relatively loose with respect to another piece. However, the whole layer of chocolate pieces is sufficiently tightly packed to remain in order. The number of layers of the chocolate pieces is not a limiting factor. More than one layer may be provided in the package, therefore, extending the matrix in a third direction $D_3$ orthogonal to plane $D_1$-$D_2$ as illustrated in Fig. 10 in which two layers 10a, 10b are superimposed.

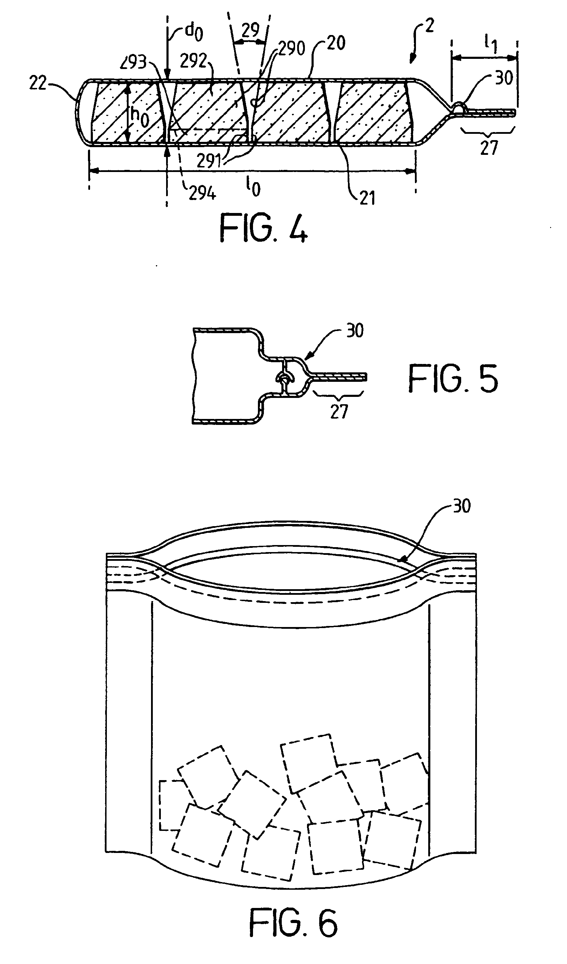

According to one important aspect of the invention, the chocolate pieces are all maintained in the matrix configuration of separate elements in a relatively close arrangement by means of an outer flow wrap package member 2 which surrounds and holds intimately the elements in place. The chocolate pieces are preferably arranged in abutting engagement together in the package while a limited gap is provided. As illustrated in fig. 4, it is preferred that there is a flared gap 29 formed between, at least, side portions 290 of confectionery pieces adjacent to one another. Side portions 290 of two adjacent pieces are arranged to form non-parallel surfaces. As a result, the confectionery pieces are more easily inclined to collapse upon opening of the package as it will be later explained. The confectionery pieces also have touching side portions 291 of adjacent confectionery pieces. The touching portions are flat parallel surfaces or lines that promote a more steady arrangement in the tensioned package. The touching portions may not necessarily need to adjoin tightly each other but, depending upon the tension of the wrapping, may keep a somewhat loose touching relationship.

For instance, in a preferred design, each piece may preferably have an upper trapezoidal cross-section 292 in both directions $D_1$ and $D_2$ and, below a transition line 294, a lower rectangular 293 cross-section in the same directions. The lower rectangular section may extend to form outwardly protruding edges (not shown).

In a preferred embodiment, the package 2 comprises two main web portions 20, 21 of a flexible wrapping material enveloping the layer 10 of separate chocolate pieces. The two web portions 20, 21 are preferably formed from a single sheet, film or web of material folded on a first edge 22 and sealed in a manner known in the packaging technology along the three remaining edges 23, 24 and 25 so as to provide a U-shaped sealing configuration with sealing seams, respectively, 26, 27 and 28. The side sealing seams 26 and 28 are orthogonally oriented with respect to the folded edge 22 to form pinch folds 26a, 28a at the intersection with the folded edge 22. At the intersection of the side seams 26, 28 and the longitudinal seam 27, the two web portions form, respectively, pinch folds 26b, 28b. The seam may be carried out by heat sealing or, alternatively cold sealing, as known in the art.

As illustrated by Fig. 4, the web or film is wrapped to intimately contact the upper and lower surfaces of the individual chocolate pieces so that a compact flow wrap packaging combination can be obtained that is substantially flat and relatively self-supporting without the need of inserting an additional support card or similar stiffening member. The film is controlled through the wrapping process to form intimate contact without the package forming a bulge. For that, the wrapping is sized and tensioned by sealing along the edges sufficiently around the layer of chocolate pieces at a magnitude that prevents an easy overlapping of one chocolate piece by another. It has been found effective for this object to have the two web portions 20, 21 being distant one another, when the package is at rest, by a distance do that is lower than twice the thickness $h_0$ of the (overall) layer(s) of the chocolate pieces. However, given the flexibility of the package material and the state of separation of the chocolate pieces within the package, the package may be inevitably submitted to some deformation despite the sizing and tensioning that can be technically applied during wrapping. Therefore, it has been found also effective to dimension the package around the product so as to maintain the maximal deformation of the package as minimal as possible to minimize the risks of disorder in the package before the package is first opened.

As an example illustrated the embodiment of Fig. 4, if one considers the perimeter of the section of the layer of the confectionery pieces as being equal to $2.(h_0 + l_0)$, with $l_0$ being the width of the chocolate layer when the pieces are substantially in abutting arrangement together, an intimate contact can be achieved between the layer of confectionery product and the packaging sleeve by dimensioning the width "W" of the web necessary for wrapping the confectionery layer by the formula :

$$W = 2.(l_0 + l_1) + h_0 . (1+ \textbf{Racine}2) + \varepsilon,$$

with $l_1$ being the width of the longitudinal seam 27 and $\varepsilon$ being a minimal tolerance dictated by the machine type and a certain safety margin for preventing deformation of the package and the "banana effect" from occurring. The $\varepsilon$ tolerance value may vary depending on a number of factors but, for instance, it may range between 1 to 10% of the width "W". Also, depending on the type of flow wrap chosen, the width of the web may be theoretically calculated by a different formula. As for example, if one considers a flow wrap having a centrally positioned longitudinal seam on one of the main sides of the package, the ideal width "W" would be calculated by a formula: $W = 2.(l_0 + h_0 + l_1) + \varepsilon$, with $l_1$ being the width of the longitudinal central seam. In a similar manner, the length of the flow wrap web with two end sealing seams may be in theory calculable by the formula: $L = 1 + l_2 + l_3 + h_0$. **Racine2,** where 1 is the longitudinal length of the confectionery product and, $l_2$ and $l_3$ represent the width of the end seams desired. Furthermore, if gussets on the edges are desired, the calculated dimensions of the web may also vary accordingly. In practice, the suitable sizing and tensioning to obtain the desired tightening around the product may be made by calculation and/or experimental iteration and machine tests.

The combination of the invention aims at providing the protection of a flow wrap package for individual confectionery pieces having reduced risks of scuffing, with the convenience of a bag or pouch for consuming the chocolates on-the-go. Therefore, the package 2 may further comprise an opening means that enables the chocolate pieces to be easily nibbled, as they would be in a regular pouch or bag. The opening of the package should not be such that the chocolate pieces are all or, at least in a majority, released at the same time, thus, that would cause melting in the hands of the consumer. For that, it is preferred that an opening system is provided which guides or aids the opening of the package and allows the package to become a bag adapted for nibbling of the chocolate pieces. Preferably, the opening system extends along one opening portion of a sufficient length. Even preferably, the opening portion extends over the greater length of the package. The opening portion is preferably located close to a side of the package thus leaving the package open as a bag having three other closed sides. Preferably, the opening portion extends along or parallel a sealing seam of the package. As an example, the opening is provided all along the longitudinal sealing seam 27. The opening system may be any suitable system already known in the flow-wrap packaging industry.

According to a preferred aspect, an opening system is preferably provided to open the bag along a predetermined elongated portion of the package so that the package is properly opened to form a bag easy for nibbling the pieces without damaging the content of the package nor delivering too many pieces at a time. Advantageously, the opening system should be placed so that the package can be opened along an edge of sufficient length, preferably, an edge of greater length as compared to the other edges. However, the opening system could also open along the edge of smaller length.

In a first embodiment, the opening system may comprise a reclosable seal such as a zipper strip 30 extending along a seam formed of a male and female interlocking arrangement illustrated in Fig. 5. As known 'per se', such a zipper strip is located internally and close to the inside of the package with the seam 27 forming an airtight, durable, safety seal before the first opening. The zipper is usually formed from a strip that is heat or cold sealed or adhesively attached to the internal surfaces of the web portions during the packaging process. The zipper could also be replaced by any equivalent reclosable sealing systems such as a simple self-sealing label, for instance.

At the first time, the package is opened by tearing or cutting across the safety seal 27 as illustrated in Fig. 6. As a result of the opening, the wrapping tension on the webs that surrounds the chocolate pieces is released sufficiently to cause the chocolate pieces to, at least partially, mix up in the package that consequently becomes a bag in which nibbling is made particularly convenient. In particular, the clearance under the form of multiple gaps provided between the chocolate pieces confers a free volume that enables the pieces to rearrange in the total volume of the pack. The flared configuration of the gaps further promotes collapsing when the package is held open in a substantially vertical position therefore promoting the collapsing of the rows of discrete confectionery pieces. As compared to a chocolate bar, the invention provides already portioned pieces that can be more easily, hygienically and friendly shared with a higher acceptability as handling with the chocolate can be avoided. The zipper, when provided, can reclose the package if still chocolate pieces remain in the bag. The zipper may be combined to another opening means that eases the opening of the package the first time such as a tear cut, a tape or perforation located further outside along the safety seam 27 with respect to the zipper.

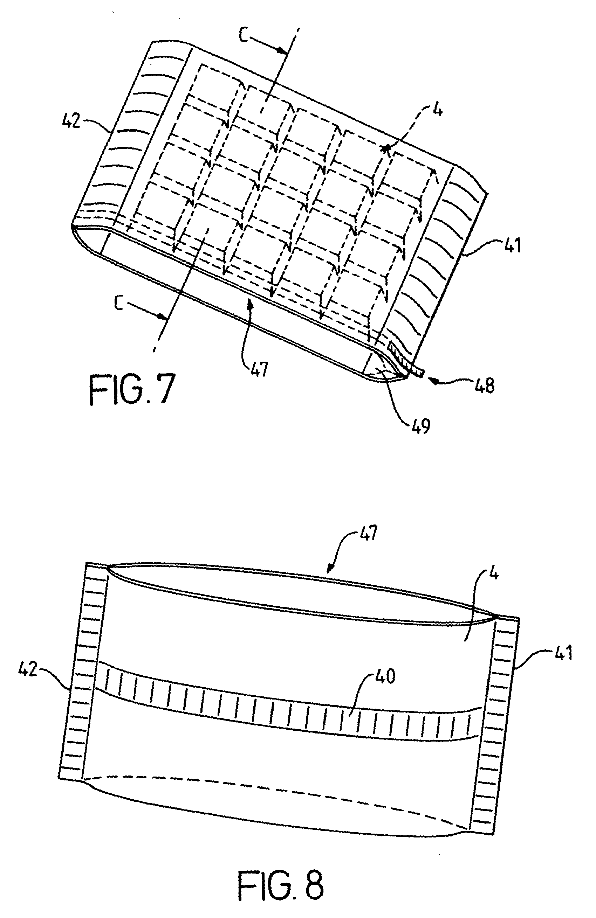

Fig. 7 to 9 illustrate another variant of the invention in which the package is a conventional flow wrap package formed by a tubular web 4 enveloping a substantially layer of individual chocolate pieces, arranged in a matrix as previously explained, with a longitudinal seam 40 which extends approximately centrally on one of the two large web surfaces 20, 21 of the package. On each end of the package is provided a transverse sealing seam 41, 42 sealed in a known manner in the packaging technology. The flow wrap package is usually formed by feeding film through a horizontal folding box device, forming the film using a former around the product and sealing a longitudinal seal.

On one longitudinal folded side 47 of the package which corresponds to opening side of the package is provided a tear tape 48 that enables the opening of the package. The tear tape is produced by adhesively connecting or sealing the tape onto the interior surface of the film before wrapping as known in the art. The folding sides of the package may further be provided with gussets 49, advantageously formed during the wrapping operation that confers a wider passage after opening by the tear tape thereby promoting access to the confectionery items for an easy nibbling.

In an equivalent manner, the tear tape may be replaced by a tear open aid under the form of a slit oriented in the longitudinal direction. The "longitudinal" direction means the direction of the package orthogonal to the end seams 41, 42. This direction also corresponds to the direction orthogonal to the conveying direction of the film in the wrapping machine. The tear-open slit may be a simple cut, effected by a blade assembly, with or without removal of material. The seal does not penetrate far across the width of the seal so as to ensure that the hermetic seal of the package is not endangered. The tear-open slit aids in initiating the tearing of the end of the package such that the user may with ease produce a tear which extends longitudinally across the opening portion and results in a full severance of an end portion of the package where the sealing seam and the tear-open slit are provided, thus, transforming the compact substantially flat package in a sachet which can be handled with the opening upwardly wide open for convenient nibbling of the pieces of chocolate. Preferably, the tear-open slit is combined with a plastic film such as a polypropylene film that is axially oriented to provide a privileged opening in the direction of the slit while resisting to tearing in the orthogonal direction to the slit.

The opening means may also be a laser perforation forming a weakening line along the opening portion. The film is usually a laminate of plastic layers and the perforation is carried out through a partial thickness of the laminate leaving the rest of the laminate's thickness intact.

The flow wrap package 2 may be formed from a flexible plastic mono-layer or laminate. The thickness of the film has preferably a thickness of from 20 to 60 microns, even preferably, of from 30 to 40 microns. The thickness of the film also depends on the number of layers wrapped in order to prevent deformation of the package as the thickness of the confectionery product increases with two or more layers. For a single layer, the thickness may preferably be of about 30 microns whereas for two superimposed layers, it is preferable to have a film of a thickness of about 40 microns to provide more rigidity to the packaging surrounding the product.

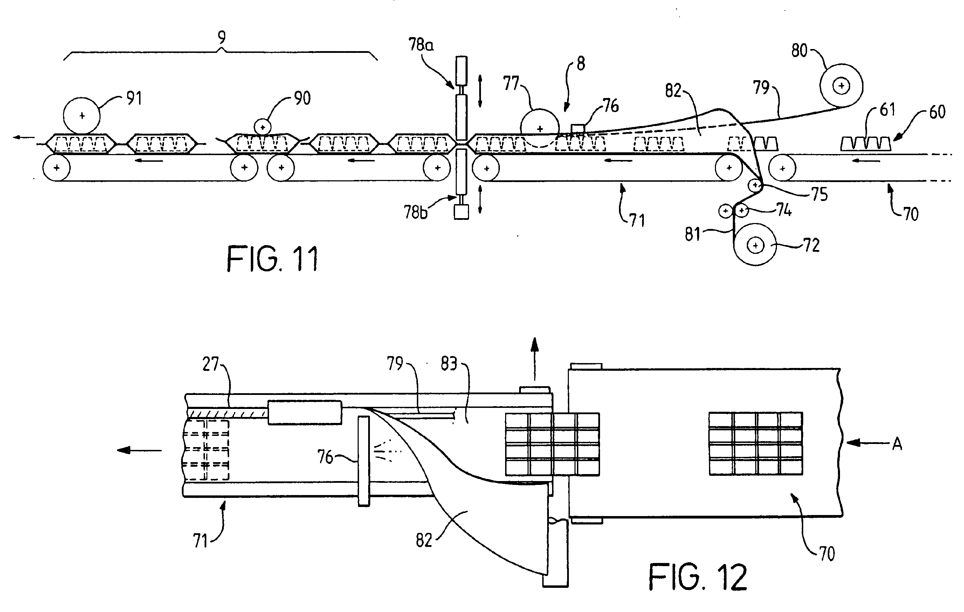

Figs. 11 to 14 illustrate a possible method for packing the chocolate pieces in the organized matrix configuration within a flow wrap package of the type described in Figs. 1 to 6. It must be noted that this method, even if preferred, may not be the only one and that other methods may also be contemplated for an equivalent result.

The principle of the method of Figs. 11 to 14 consists in packing the chocolate pieces in an organized way without scuffing the individual pieces. For that, a solid scored block 60 of product is firstly tightly wrapped and subsequently broken up in the wrap to form the individual chocolate pieces using suitable breaking-up means.

Fig. 11 shows a packaging line where individual moulded blocks 60 of chocolate are horizontally fed from a conveyor belt 70 to a wrapping unit 8. The moulded blocks are parallelepipedal blocks scored with crossed grooves 61 forming imprints corresponding to the desired contour of the chocolate pieces. The grooves must resist to demoulding from the moulding unit but should be relatively easy to break in the breaking unit while not forming too many small fragments or marks on the chocolate surface. The grooves are also intended to form the clearance. For that, the grooves are normally provided with a depth of the order of about 15 to 30% of the thickness of the block. As a matter of example, the thickness of the block may be of 11 mm and the grooves may have a depth of about 2.5 mm.

The feeding conveyor belt 70 could also be replaced by a robotic device that lift the blocks from the moulding unit to place them on to the wrapping unit. However, this solution may not be suitable for high throughput operations and may be more expensive and require more maintenance than usual conveyor feeding.

The block of chocolate 60 is enveloped in the wrapping unit horizontally; more specifically, by application of the block flat onto a first half 83 of the packaging web and by folding a second half 82 of the packaging web on top of the block using a suitable directional driving roller assembly. The wrapping unit can be a standard equipment such as an horizontal flow pack machine of reference "SIG-HSF" commercialized by S.I.G Schweizerische Industrie-Gesellshaft. In such a wrapping assembly, a heat sealable continuous, plastic film 81 is pulled from a plastic film supply roll 72 located from beneath of the entry of a second conveyor belt 71 by a drive and pinch roll pair 74 and optionally a directional roller 75 so as to apply flat on the second conveyor belt 71 a first half 83 of the film. The second half 82 of the packaging film is forced to fold upon the block of chocolate by means of a folding means such as a bracket 76 that restricts the vertical passage of the film along the conveyor and envelops over the top side of the scored blocks of chocolate. A longitudinal resistant heat seal is carried out by a roller 77 positioned on the side of the two superimposed free end of the folded film. When heat sealing is carried out, the roller may include integrated heater elements of sufficient resistive power to fuse the two ends of the film and cause them to bong together. The position of the seal may determine the tension applied to the package. The seal is preferably carried out as close as possible to the side of the block with a safety margin necessary not to damage the chocolate by the fusion or sealing pressure.

Alternatively, the sealing may be done by cold sealing of a latex seam or similar self-sealable material. In this case, pressure of a pressure means is only sufficient for sealing, thus, allowing to run the wrapping line at a higher speed. The dimension and tension of the package must be predetermined by placing the self-sealable cord at the right location along and across the internal surface of the web to form the seams.

As illustrated in Fig. 11 also, an integrated opening system such as a tear tape or a plastic zipper may optionally be provided along the longitudinal seam. For example, a zipper or tape strip 79 is pulled from a heat sealable zipper or tape strip supply roll 80 and is inserted between the two webs in the seam area before longitudinal sealing. The sealing of the longitudinal seam causes the zipper or tape strip to bond to the internal surfaces of the webs and to be retained in suitable position to form the easy opening system. The zipper or tape strip may be cut individually by a cutting system at the correct length just before sealing by an independent cutting assembly (not shown) or alternatively cut at the length of the package by the same cutting tools used to later separate the packages. Further ahead on the wrapping line is provided a pair of platens or jaws 78, 79 that reciprocate in abutting relationship at regular intervals corresponding to the distance between two adjacent packaged blocks on the line. The platens form the transverse sealing seams of the package and may be combined to a cutting tool to separate the packages along the middle of the seal. The platens or jaws may include heaters for making a heat sealing or have no heaters when cold sealing is considered. The cutting tool may also be provided separately shortly after the sealing station. The platens could also be replaced by rotary jaws as known in the art.

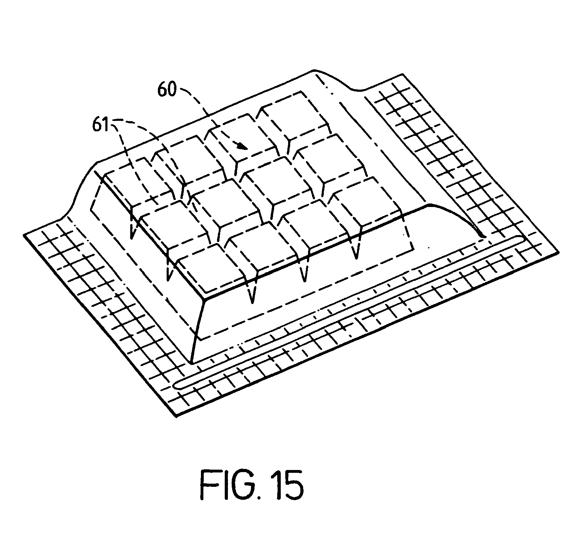

A block 60 wrapped in its flow wrap package is illustrated in Fig. 15 as a matter of example. After the sealed packages are separated by cutting, the packages are individually passed through a breaking station 9 that operates the portioning of the block into the several pieces of chocolate according to the scored pattern envisaged. The in-pack breaking of the chocolate block may encompass various embodiments. One of the simplest way is to use contoured rollers that apply a breaking effort onto the block and/or force the block to follow an arcuate conveying path while the block travels along the conveyor means.

Fig. 12 shows the breaking along the grooves of the block oriented transversally to the conveying direction "A". There may be various ways to severe the block. A relatively small-diameter roller 90 is used that forces the block to travel a downward radius "R" of curvature that is short enough to severe the block along its transverse grooves 61. The roller may be positioned in the vicinity of two conveyor means, positioned relative to the other at a different height, so as to aid in breaking the block as the block can further bend downward. There may be other solutions such as breaking the block between two conveyor belts, for instance (not shown).

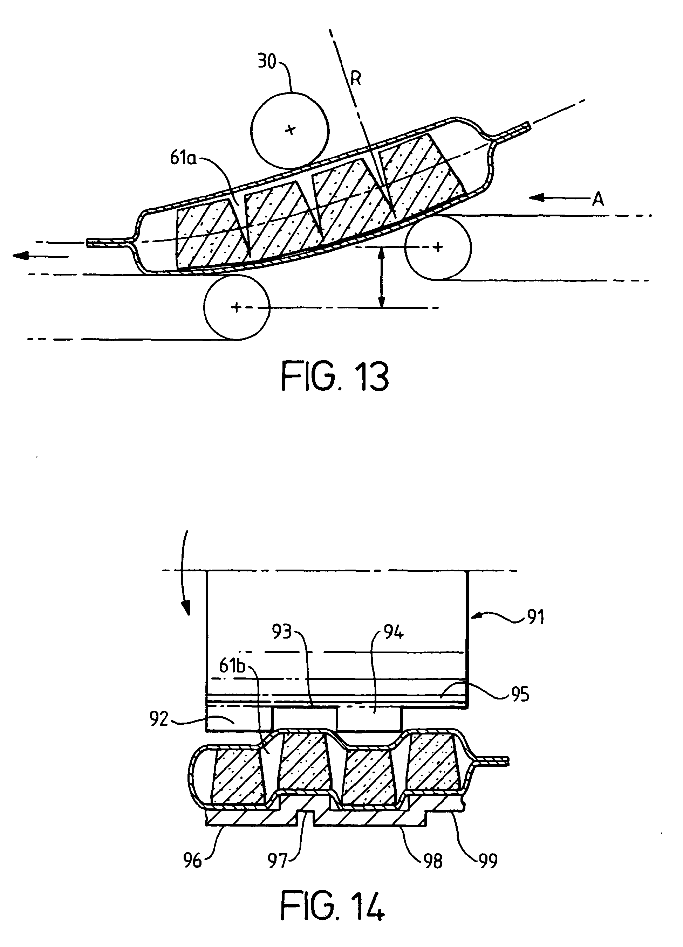

Fig. 14 shows the breaking along the grooves 61b of the block oriented parallel to the conveying direction. A single roller 91 of large diameter may be used with various stepped portions 92, 93, 94, 95 that promote the bending of the rows of chocolate and their separation. They may also be complementary stepped portions 96, 97, 98, 99 on the surface of the belt to help the deformation of the block and prevent the blocks from being crushed. The roller 91 could also be divided in separate longitudinally spaced apart rollers, each arranged to break one single groove between two rows of chocolates. The rollers are preferably made of relatively soft material such as rubber or a polymeric foam to prevent damages and scuffing of the chocolate.

The rollers 90, 91 can be driven to successfully break the blocks in separate chocolate pieces at a speed up to about 400 packs per minute. The operational conditions and parameters such as the temperature of the block, humidity, dimensioning of the grooves, speed, geometry of the breaking means, etc. can be adjusted by the man skilled in the art to optimise the breaking process and output while reducing the production of chocolate debris and crooked edges.

A wide range of modifications may be contemplated in the wrapping unit according to the type of flow wrap package desired. For example, the flow wrap package, as apparent on Fig. 7 to 9, is produced in a conventional horizontal flow wrap machine with a supply roll of film pulled from above the conveyor line and sealing of a longitudinal seam below the tubular sleeve that is produced. A suitable machine for such a packaging may be a flow wrap machine of "HBM" type from S.I.G.

In a further variant of the invention, the confectionery product could also be wrapped by the flow wrap package as individual separate confectionery pieces. For that, the confectionery items may be moulded as separate items or, alternatively, moulded as a block and subsequently broken before wrapping. The confectionery items may be arranged in matrix and transported onto the wrapping film by different means such as by a robotic device that moves the pieces in-group while retaining the matrix pattern until placing on the film and wrapping are achieved.

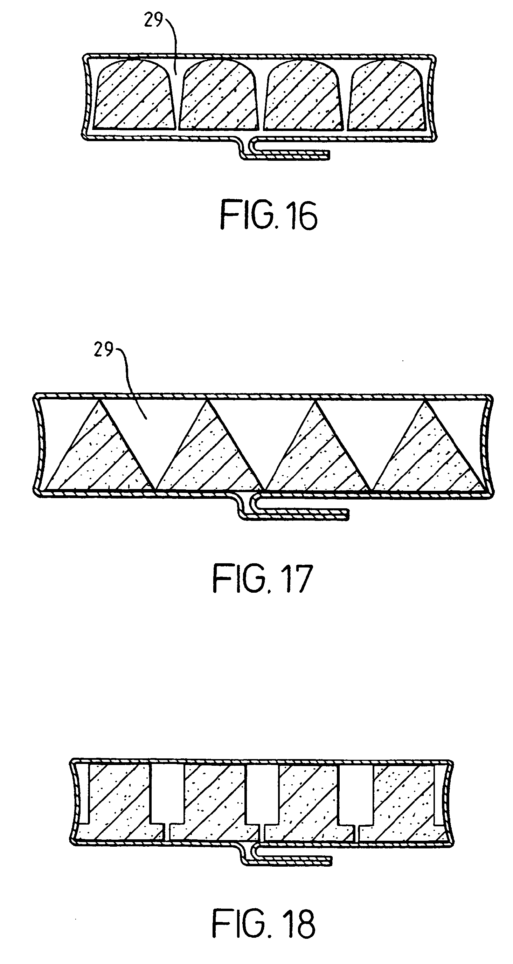

In other possible variants as illustrated in figs. 16 and 17, the confectionery pieces may have various sections such as rounded or triangular shapes that also provide a flared gap between two adjacent pieces. Furthermore, the clearance may not necessarily be a flared gap but may be a constant gap with distant but parallel portions as illustrates fig. 18.

The invention is not limited to the embodiments hereinbefore described which may be varied in construction and detail. For instance, the package member may be a four-side seal flow pack as well.

**Claims**

1.  Packaged confectionery combination comprising a closed flexible package member (2) constituted of a flow wrap package and a confectionery product (10) wherein said confectionery product (10) comprises a plurality of individual confectionery pieces packed in group within said package member; wherein said confectionery pieces are arranged in a matrix configuration along at least two directions (D1, D2) within the package member so as to form at least one layer of at least two rows (11,12,13,14); each row consisting of a series of individual confectionery pieces (110,111,112,113), and wherein said package member is tight enough around the confectionery pieces so as to maintain the integrity and shape of said matrix configuration when the package member (2) is closed, **characterised in that** the confectionery pieces are arranged so as to leave a clearance (29) between the confectionery pieces effective to enable confectionery pieces to collapse in the available volume of the package member when opened wherein the sides of the confectionery pieces have touching portions (291) extending by distant portions (290) forming said clearance.

2.  Packaged confectionery combination according to any one of the preceding claims, wherein the confectionery pieces are housed in the interior of the flow wrap package freely without additional support member.

3.  Packaged confectionery combination according to any one of the preceding claims, wherein the flow wrap package member (2) comprises two opposite web portions (20,21) wrapping on each main side of said layer (s) to form a sleeve that is sealed along a longitudinal seam (27) and delimited at both ends by two transverse seams (26,28).

4.  Packaged confectionery combination according to claim 3, wherein said package member (2) is constituted by a sleeve forming two rectangular opposite web portions (20,21) folded along one edge (22) and having three other edges (23, 24, 25) forming sealing seams (26, 27, 28).

5.  Packaged confectionery combination according to claim 4, wherein said sleeve forms a substantially flattened tubular web (4) with a longitudinal seam (40) extending approximately centrally along one side of the sleeve and closed on both transverse edges by transverse end seams (41,42).

6.  Packaged chocolate combination according to any of claims 3 to 5, wherein said web portions (20,21) are maintained distant from each other, at rest, a distance (do) that is lower than twice the overall thickness (ho) of said layer (s) (10,10a, lOb).

7.  Packaged confectionery combination according to any of the preceding claims, wherein said package member (2) comprises an opening portion with an opening means (30) adapted to open said opening portion of said package member whereby opening of said opening means causes the tension of the package member around the confectionery pieces to release and consequently, enables the confectionery pieces to lose their matrix configuration and to become disordered in the package member.

8.  Packaged confectionery combination according to claim 7, wherein said opening means (30) is arranged along one edge (24) of the package member.

9.  Packaged confectionery combination according to claim 7 or 8, wherein said opening means (30) is arranged to open longitudinally.

10. Packaged confectionery combination according to claim 7, 8 or 9, wherein said opening means (30) comprises a tear cut means, a zipper-type opening, a tear tape, perforation, laser perforation or combination (s) thereof.

11. Packaged confectionery combination according to any of the preceding claims, wherein the confectionery pieces have angular surfaces.

12. Packaged confectionery combination according to claim 11, wherein the confectionery pieces form, when arranged in abutting relationship in the matrix configuration of several rows, a substantially parallelepipedal shape.

13. Packaged confectionery combination according to any of claims 1 to 12, wherein said confectionery pieces are distributed as individual separate pieces and subsequently wrapped in group.

14. Packaged confectionery combination according to any of the preceding claims, wherein the at least two rows (11,12,13,14) are arranged in parallel in the package member.

15. Packaged confectionery combination according to any of the preceding claims, wherein the confectionery product comprises two superimposed layers (10a, 10b) of separate confectionery pieces extending the matrix configuration to a third dimension (D3).

16. Packaged confectionery combination according to any of the preceding claims wherein the confectionery pieces have a chocolate outer surface.

17. A method for providing a confectionery product in the form of confectionery pieces in a package that reduces scuffing of the pieces and promotes nibbling of the confectionery pieces wherein the confectionery pieces are wrapped in a flow wrapped package (2) in a matrix configuration along at least two directions (D1, D2) within the package so as to form at least one layer (10) of at least two rows (11,12,13,14); each row consisting of a series of confectionery pieces (110, 111, 112, 113) and the rows being arranged in parallel together and wherein said package is adapted in tension and size around the confectionery pieces to retain said matrix configuration when closed and, conversely, is adapted to release tension sufficiently upon opening to form an open bag for nibbling of the confectionery pieces, **characterised in that** the confectionery pieces are arranged so as to leave a clearance (29) between the confectionery pieces effective to enable confectionery pieces to collapse in the available volume of the package member when opened wherein the sides of the confectionery pieces have touching portions (291) extending by distant portions (290) forming said clearance.

18. Method for producing a packaged confectionery combination according to claim 1 which comprises providing a scored block (60) of confectionery, wrapping said block into a flow wrap package and breaking up said block into said flow wrap package.

19. Method according to claim 18, wherein said wrapping is carried out horizontally in an horizontal wrap device (8).

20. Method according to claim 18 or 19, wherein the plurality of confectionery pieces, as a result, is wrapped as a tight assembly of pieces capable of retaining its shape assembly of separate abutting pieces after breaking.

21. Method for producing a combination consisting of a flow wrap package (2) and a confectionery product (10) wrapped within the package wherein the confectionery product is wrapped horizontally using an horizontal flow wrap device (8) and wherein the confectionery product is wrapped while forming a sleeve member having at least one longitudinal seam (27) and wherein, the confectionery product forms, after wrapping, an arrangement of at least one layer (10, 10a, 10b) of a plurality of separate confectionery pieces of more than one row (11, 12, 13, 14); each row comprising at least two confectionery pieces (110,111,112,113) and wherein the flow wrap is capable of maintaining said arrangement in place until first opening of the flow wrap, **characterised in that** the confectionery pieces are arranged so as to leave a clearance (29) between the confectionery pieces effective to enable confectionery pieces to collapse in the available volume of the package member when opened wherein the sides of the confectionery pieces have touching portions (291) extending by distant portions (290) forming said clearance.

22. Method according to claim 21, wherein the arrangement of confectionery pieces is retained in place, at least partly by the control of the width and tension of the sleeve member as determined by the sealing of the longitudinal seam.

23. Method according to claim 21 or 22, wherein the arrangement of confectionery pieces is wrapped while leaving a clearance (29) between the confectionery pieces effective for the confectionery to collapse upon opening of the package and to occupy a volume less than the total available volume of the opened package.

**Patentansprüche**

1.  Verpackte-Süßwaren-Kombination mit einem geschlossenen flexiblen Verpackungsteil (2), das von einer Schlauchbeutelverpackung gebildet wird, und einem Süßwarenprodukt (10), wobei das Süßwarenprodukt (10) eine Vielzahl von individuellen Süßwarenstücken umfasst, die in Gruppen in dem genannten Verpackungsteil verpackt sind; wobei die genannten Süßwarenstücke in einer Matrixanordnung in wenigstens zwei Richtungen (D1, D2) in dem Verpackungsteil angordnet sind, so dass sie wenigstens eine Schicht aus wenigstens zwei Reihen (11, 12, 13, 14) bilden, wobei jede Reihe aus einer Serie von individuellen Süßwarenstücken (110, 111, 112, 113) besteht und wobei das genannte Verpackungsteil dicht genug an den Süßwarenstücken anliegt, um die Integrität und Form der genannten Matrixanordnung beizubehalten, wenn das Verpackungsteil (2) geschlossen ist, **dadurch gekennzeichnet, dass** die Süßwarenstücke so angeordnet sind, dass ein Zwischenraum (29) zwischen den Süßwarenstücken freigelassen wird, der es den Süßwarenstücken ermöglicht, in das verfügbare Volumen des Verpackungsteils zu kollabieren, wenn dieses geöffnet wird, wobei die Seiten der Süßwarenstücke Kontaktabschnitte (291) aufweisen, die in beabstandete Abschnitte (290) übergehen, die den genannten Zwischenraum bilden.

2.  Verpackte-Süßwaren-Kombination nach Anspruch 1, wobei die Süßwarenstücke im Innenraum der Schlauchbeutelverpackung frei ohne zusätzliches Trägerteil angeordnet sind.

3.  Verpackte-Süßwaren-Kombination nach irgendeinem der vorausgehenden Ansprüche, wobei das Schlauchbeutel-Verpackungsteil (2) zwei einander gegenüberliegende Bahnabschnitte (20, 21) umfasst, die jede Hauptseite der genannten Schicht(en) bedecken, so dass eine Hülse gebildet wird, die entlang eines Längssaums (27) verschlossen ist und die an beiden Enden von zwei Quersäumen (26, 28) begrenzt wird.

4.  Verpackte-Süßwaren-Kombination nach Anspruch 3, wobei das genannte Verpackungsteil (2) von einer Hülse gebildet wird, die zwei rechteckige, einander gegenüberliegende Bahnabschnitte (20, 21), die an einer Kante (22) gefaltet sind, bildet, und die drei weitere Kanten (23, 24, 25) aufweist, die die Verschlusssäume (26, 27, 28) bilden.

5.  Verpackte-Süßwaren-Kombination nach Anspruch 4, wobei die genannte Hülse eine im Wesentlichen abgeflachte rohrförmige Bahn (4) mit einer Längsnaht (40) bildet, die sich etwa zentral längs einer Seite der Hülse erstreckt, und die an beiden Querkanten durch querverlaufende Endsäume (41, 42) verschlossen wird.

6.  Verpackte-Süßwaren-Kombination nach irgendeinem der Ansprüche 3 bis 5, wobei die genannten Bahnabschnitte (20, 21) in der Ruhe in einem Abstand (do) voneinander gehalten werden, der geringer ist als das Doppelte der Gesamtdicke (ho) der genannten Schicht(en) (10, 10a, 10b).

7.  Verpackte-Süßwaren-Kombination nach irgendeinem der vorausgehenden Ansprüche, wobei das genannte Verpackungsteil (2) einen Öffnungsabschnitt mit einem Öffnungselement (30) umfasst, das dazu geeignet ist, den genannten Öffnungsabschnitt des genannten Verpackungsteils zu öffnen, wobei das Öffnen des genannten Öffnungselements dazu führt, dass die Spannung des Verpackungsteils um die Süßwarenstücke gelöst wird und es den Süßwarenstücken folglich möglich wird, ihre Matrixanordnung zu verlieren und in dem Verpackungsteil ungeordnet vorzuliegen.

8.  Verpackte-Süßwaren-Kombination nach Anspruch 7, wobei das genannte Öffnungselement (30) längs einer Kante (24) des Verpackungsteils angeordnet ist.

9.  Verpackte-Süßwaren-Kombination nach Anspruch 7 oder 8, wobei das genannte Öffnungselement (30) so angeordnet ist, dass es in Längsrichtung öffnet.

10. Verpackte-Süßwaren-Kombination nach Anspruch 7, 8 oder 9, wobei das genannte Öffnungselement (30) eine Aufreißeinschnittelement, eine Öffnung vom Reißverschlußtyp, ein Aufreißband, eine Perforation, eine Laserperforation oder irgendeine Kombination davon umfasst.

11. Verpackte-Süßwaren-Kombination nach irgendeinem der vorausgehenden Ansprüche, wobei die Süßwarenstücke abgewinkelte Oberflächen aufweisen.

**12.** Verpackte-Süßwaren-Kombination nach Anspruch 11, wobei die Süßwarenstücke, wenn sie in einer aneinander anliegenden Anordnung in der Matrixkonfiguration mit mehreren Reihen angeordnet sind, im Wesentlichen eine Parallelepiped-Form bilden.

**13.** Verpackte-Süßwaren-Kombination nach irgendeinem der Ansprüche 1 bis 12, wobei die genannten Süßwarenstücke als individuell getrennte Stücke ausgegeben und anschließend gruppenweise umhüllt werden.

**14.** Verpackte-Süßwaren-Kombination nach irgendeinem der vorausgehenden Ansprüche, wobei die wenigstens zwei Reihen (11, 12, 13, 14) in dem Verpackungsteil parallel angeordnet sind.

**15.** Verpackte-Süßwaren-Kombination nach irgendeinem der vorausgehenden Ansprüche, wobei das Süßwarenprodukt zwei übereinander angeordnete Schichten (10a, 10b) aus getrennten Süßwarenstücken umfasst, die die Matrixanordnung in eine dritte Dimension (D3) erweitern.

**16.** Verpackte-Süßwaren-Kombination nach irgendeinem der vorausgehenden Ansprüche, wobei die Süßwarenstücke eine Schokoladen-Außenfläche aufweisen.

**17.** Verfahren zur Bereitstellung eines Süßwarenprodukts in Form von Süßwarenstücken in einer Verpackung, die ein Abscheuern der Stücke vermindert und das Knabbern der Süßwarenstücke erleichtert, wobei die Süßwarenstücke in einer Schlauchbeutelverpackung (2) in einer Matrixanordnung in wenigstens zwei Richtungen (D1, D2) in der Verpackung umhüllt werden, so dass wenigstens eine Schicht (10) aus wenigstens zwei Reihen (11, 12, 13, 14) gebildet wird, wobei jede Reihe aus einer Serie von Süßwarenstücken (110, 111, 112, 113) besteht und die Reihen parallel zueinander angeordnet sind, und wobei die genannte Verpackung bezüglich ihrer Spannung und Dimensionierung um die Süßwarenstücke geeignet ist, die genannte Matrixanordnung aufrecht zu halten, wenn sie geschlossen ist, und andererseits geeignet ist, dass die Spannung beim Öffnen ausreichend gelöst wird, so dass ein offener Beutel für das Knabbern der Süßwarenstücke gebildet wird, **dadurch gekennzeichnet, dass** die Süßwarenstücke so angeordnet sind, dass ein Zwischenraum (29) zwischen den Süßwarenstücken freigelassen wird, der es den Süßwarenstücken ermöglicht, in das verfügbare Volumen des Verpackungsteils zu kollabieren, wenn dieses geöffnet wird, wobei die Seiten der Süßwarenstücke Kontaktabschnitte (291) aufweisen, die in beabstandete Abschnitte (290) übergehen, die den Zwischenraum bilden.

**18.** Verfahren zur Herstellung einer Verpackte-Süßwaren-Kombination nach Anspruch 1, das das Bereitstellen eines mit Kerben versehenen Blocks (60) einer Süßware, das Umhüllen des Blocks mit einer Schlauchbeutelverpakkung und das Zerbrechen des Blocks in der Schlauchbeutelverpackung umfasst.

**19.** Verfahren nach Anspruch 18, wobei das genannte Umhüllen horizontal in einer horizontalen Schlauchbeutelvorrichtung (8) erfolgt.

**20.** Verfahren nach Anspruch 18 oder 19, wobei die Vielzahl von Süßwarenstücken im Ergebnis als echte Anordnung von Stücken umhüllt wird, die in der Lage ist, ihre Formanordnung aus getrennten aneinander anliegenden Stücken nach dem Brechen beizubehalten.

**21.** Verfahren zur Herstellung einer Kombination, die besteht aus einer Schlauchbeutelverpackung (2) und einem Süßwarenprodukt (10), das in der Verpackung verpackt ist, wobei das Süßwarenprodukt horizontal unter Verwendung einer horizontalen Schlauchbeutelvorrichtung (8) umhüllt wird, und wobei das Süßwarenprodukt umhüllt wird, während ein Hülsenteil mit wenigstens einer Längsnaht (27) gebildet wird, und wobei das Süßwarenprodukt nach dem Umhüllen eine Anordnung aus wenigstens einer Schicht (10, 10a, 10b) aus einer Vielzahl von getrennten Süßwarenstücken bildet, die von mehr als einer Reihe (11, 12, 13, 14) gebildet wird, wobei jede Reihe wenigstens zwei Süßwarenstücke (110, 111, 112, 113) umfasst, und wobei der Schlauchbeutel in der Lage ist, die genannte Anordnung bis zum ersten Öffnen des Schlauchbeutels an Ort und Stelle zu halten, **dadurch gekennzeichnet, dass** die Süßwarenstücke so angeordnet sind, dass ein Zwischenraum (29) zwischen den Süßwarenstücken frei bleibt, der es den Süßwarenstücken in wirksamer Weise ermöglicht, in das verfügbare Volumen des Verpackungsteils zu kollabieren, wenn dieses geöffnet wird, wobei die Seiten der Süßwarenstücke Kontaktabschnitte (291) aufweisen, die in beabstandete Abschnitte (290) übergehen, die den genannten Zwischenraum bilden.

**22.** Verfahren nach Anspruch 21, wobei die Anordnung von Süßwarenstücken wenigstens teilweise durch die Kontrolle der Weite und Spannung des Hülsenteils an Ort und Stelle gehalten wird, wie sie durch das Verschließen der Längsnaht bestimmt werden.

**23.** Verfahren nach Anspruch 21 oder 22, wobei die Anordnung von Süßwarenstücken verpackt wird, während man einen Abstand (29) zwischen den Süßwarenstücken freiläßt, der im Hinblick auf ein Kollabieren der Süßware beim Öffnen der Verpackung wirksam ist und zum Einnehmen eines Volumens, das geringer ist als das gesamte verfügbare Volumen der geöffneten Verpackung.

**Revendications**

**1.** Combinaison de confiseries sous forme emballée comprenant un élément d'emballage souple fermé (2) constitué d'un emballage *flow-wrap* et d'un produit de confiserie (10), dans laquelle ledit produit de confiserie (10) comprend une pluralité de bouchées de confiserie individuelles emballées en un groupe au sein dudit élément d'emballage ; dans laquelle lesdites bouchées de confiserie sont agencées en une configuration de matrice le long d'au moins deux directions ($D_1$, $D_2$) au sein de l'élément d'emballage afin de former au moins une couche d'au moins deux rangées (11, 12, 13, 14) ; chaque rangée consistant en une série de bouchées de confiserie individuelles (110, 111, 112, 113), et dans laquelle ledit élément d'emballage est suffisamment serré autour des bouchées de confiserie afin de maintenir l'intégrité et la forme de ladite configuration de matrice lorsque l'élément d'emballage (2) est fermé, **caractérisée en ce que** les bouchées de confiserie sont agencées pour laisser un jeu (29) entre les bouchées de confiserie servant à permettre aux bouchées de confiserie de tomber dans le volume disponible de l'élément d'emballage une fois celui-ci ouvert, lés côtés des bouchées de confiserie comportant des portions se contactant (291) se prolongeant par des portions distantes (290) formant ledit jeu.

**2.** Combinaison de confiseries sous forme emballée selon l'une quelconque des revendications précédentes, dans laquelle les bouchées de confiserie sont logées à l'intérieur de l'emballage *flow-wrap* librement sans élément de support supplémentaire.

**3.** Combinaison de confiseries sous forme emballée selon l'une quelconque des revendications précédentes, dans laquelle l'élément d'emballage *flow-wrap* (2) comprend deux portions de parois opposées (20, 21) s'enroulant sur chaque côté principal de ladite couche ou desdites couches pour former un manchon qui est soudé le long d'une soudure longitudinale (27) et délimité aux deux extrémités par deux soudures transversales (26, 28).

**4.** Combinaison de confiseries sous forme emballée selon la revendication 3, dans laquelle ledit élément d'emballage (2) est constitué par un manchon formant deux portions de parois opposées rectangulaires (20, 21) pliées le long d'un bord (22) et ayant trois autres bords (23, 24, 25) formant des soudures d'étanchéité (26, 27, 28).

**5.** Combinaison de confiseries sous forme emballée selon la revendication 4, dans laquelle ledit manchon forme une paroi tubulaire sensiblement aplatie (4) avec une soudure longitudinale (40) s'étendant approximativement centralement le long d'un côté du manchon et fermée sur les deux bords transversaux par des soudures d'extrémité transversales (41, 42).

**6.** Combinaison de chocolats sous forme emballée selon l'une quelconque des revendications 3 à 5, dans laquelle lesdites portions de parois (20, 21) sont gardées distantes l'une de l'autre, au repos, à une distance ($d_o$) qui est inférieure à deux fois l'épaisseur totale ($h_o$) de ladite couche ou desdites couches (10, 10a, 10b).

**7.** Combinaison de confiseries sous forme emballée selon l'une quelconque des revendications précédentes, dans laquelle ledit élément d'emballage (2) comprend une portion d'ouverture ayant un moyen d'ouverture (30) apte à ouvrir ladite portion d'ouverture dudit élément d'emballage, de sorte que l'ouverture dudit moyen d'ouverture amène la tension de l'élément d'emballage autour des bouchées de confiserie à se relâcher et, par conséquent, permette aux bouchées de confiserie de perdre leur configuration de matrice et de devenir désordonnées dans l'élément d'emballage.

**8.** Combinaison de confiseries sous forme emballée selon la revendication 7, dans laquelle ledit moyen d'ouverture (30) est agencé le long d'un bord (24) de l'élément d'emballage.

**9.** Combinaison de confiseries sous forme emballée selon la revendication 7 ou 8, dans laquelle ledit moyen d'ouverture (30) est agencé pour s'ouvrir longitudinalement.

**10.** Combinaison de confiseries sous forme emballée selon la revendication 7, 8 ou 9, dans laquelle ledit moyen d'ouverture (30) comprend un moyen de découpe par arrachage, une fermeture du type à glissière, une bandelette d'arrachage, une perforation, une perforation laser ou une combinaison dé ceux-ci.

11. Combinaison de confiseries sous forme emballée selon l'une quelconque des revendications précédentes, dans laquelle les bouchées de confiserie ont des surfaces angulaires.

12. Combinaison de confiseries sous forme emballée selon la revendication 11, dans laquelle les bouchées de confiserie forment, une fois agencées en butée dans la configuration de matrice de plusieurs rangées, une forme sensiblement parallélépipédique.

13. Combinaison de confiseries sous forme emballée selon l'une quelconque des revendications 1 à 12, dans laquelle lesdites bouchées de confiserie sont distribuées en bouchées séparées individuelles puis enveloppées en groupé.

14. Combinaison de confiseries sous forme emballée selon l'une quelconque des revendications précédentes, dans laquelle les au moins' deux rangées (11, 12, 13, 14) sont agencées parallèlement dans l'élément d'emballage.

15. Combinaison de confiseries sous forme emballée selon l'une quelconque des revendications précédentes, dans laquelle le produit de confiserie comprend deux couches superposées (10a, 10) de bouchées de confiserie séparées étendant la configuration de matrice en une troisième dimension (D3).

16. Combinaison de confiseries sous forme emballée selon l'une quelconque des revendications précédentes, dans laquelle les bouchées de confiserie ont une surface externe en chocolat.

17. Procédé pour fournir un produit de confiserie sous la forme de bouchées de confiserie dans un emballage qui réduit la dégradation par frottement des bouchées et facilite le grignotage des bouchées de confiserie, les bouchées de confiserie étant enveloppées dans un emballage flow-wrap (2) en une configuration de matrice le long d'au moins deux directions ($D_1$, $D_2$) au sein de l'emballage afin de former au moins une couche (10) d'au moins deux rangées (11, 12, 13, 14) ; chaque rangée consistant en une série de bouchées de confiserie (110, 111, 112, 113) et les rangées étant agencées parallèlement et ledit emballage étant apte, en tension et en dimension autour des bouchées de confiserie, à retenir ladite configuration de matrice une fois fermée et, inversement, étant apte à relâcher suffisamment la tension au moment de l'ouverture pour former un sachet ouvert pour le grignotage des bouchées de confiserie, **caractérisé en ce que** les bouchées de confiserie sont agencées de manière à laisser un jeu (29) entre les bouchées de confiserie servant à permettre aux bouchées de confiserie de tomber dans le volume disponible de l'élément d'emballage une fois celui-ci ouvert, les côtés des bouchées de confiserie comportant des portions se contactant (291) se prolongeant par des portions distantes (290) formant ledit jeu.

18. Procédé pour produire une combinaison de confiseries sous forme emballée selon la revendication 1, qui comprend la fourniture d'un bloc entaillé (60) de confiserie, l'enveloppement dudit bloc dans un emballage *flow-wrap* et la division dudit bloc dans ledit emballage *flow-wrap*.

19. Procédé selon la revendication 18, dans lequel ledit enveloppement est réalisé horizontalement dans un dispositif d'enveloppement horizontal (8).

20. Procédé selon la revendication 18 ou 19, dans lequel la pluralité de bouchées de confiserie, par conséquent, est enveloppée en un ensemble serré de bouchées capable de garder sa forme assemblée de bouchées séparées en butée après division.

21. Procédé pour produire une combinaison consistant en un emballage *flow-wrap* (2) et un produit de confiserie (10) enveloppé au sein de l'emballage, dans lequel le produit de confiserie est enveloppé horizontalement en utilisant un dispositif d'enveloppement flow-wrap horizontal (8) et dans lequel le produit de confiserie est enveloppé tout en formant un élément de manchon comportant au moins une soudure longitudinale (27) et dans lequel le produit de confiserie forme, après enveloppement, un agencement d'au moins une couche (10, 10a, 10b) d'une pluralité de bouchées de confiserie séparées de plus d'une rangée (11, 12, 13, 14) ; chaque rangée comprenant au moins deux bouchées de confiserie (110, 111, 112, 113) et dans lequel l'emballage *flow-wrap* est capable de maintenir ledit agencement en place jusqu'à la première ouverture de l'emballage *flow-wrap,* **caractérisé en ce que** les bouchées de confiserie sont agencées afin de laisser un jeu (29) entre les bouchées de confiserie servant à permettre aux bouchées de confiserie de tomber dans le volume disponible de l'élément d'emballage une fois celui-ci ouvert, les côtés des bouchées de confiserie comportant des portions se contactant (291) se prolongeant par des portions distantes (290) formant ledit jeu.

**22.** Procédé selon la revendication 21, dans lequel l'agencement de bouchées de confiserie est retenu en place, au moins en partie par le contrôle de la largeur et de la tension de l'élément de manchon tel que déterminé par l'étanchéité de la soudure longitudinale.

**23.** Procédé selon la revendication 21 ou 22, dans lequel l'agencement de bouchées de confiserie est enveloppé tout en laissant un jeu (29) entre les bouchées de confiserie servant à permettre à la confiserie de tomber lors de l'ouverture de l'emballage et d'occuper un volume inférieur au volume disponible total de l'emballage ouvert.

FIG.1

FIG. 2

FIG. 3

FIG. 4

FIG. 5

FIG. 6

FIG.7

FIG.8

20

21

40

FIG. 9

$D_3$

20

$h_0$

10b

10a

21

FIG. 10

FIG. 11

FIG. 12

EP 1 401 738 B1

FIG. 13

FIG. 14

FIG. 15

29

FIG.16

29

FIG.17

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0109353 A

- FR 850597